# EUROPEAN PATENT SPECIFICATION

(11) **EP 3 393 891 B1**
(45) Date of publication and mention of the grant of the patent: **18.12.2019**
(21) Application number: 16834194.9
(22) Date of filing: 22.12.2016
(51) Int. Cl.: B62D 33/06, B62D 63/02

(54) **MODULAR CABIN FOR INDUSTRIAL VEHICLE COMPRISING AN AUXILIARY FRAME, AN AUXILIARY FRAME FOR SUCH A MODULAR CABIN, AND A METHOD FOR PRODUCING SUCH A MODULAR CABIN.**
MODULARE KABINE FÜR EIN NUTZFAHRZEUG MIT EINEM HILFSRAHMEN, EIN HILSRAHMEN FÜR EINE SOLCHE MODULARE KABINE, UND VEFAHREN ZUR HESTELLUNG EINER SOLCHEN MODULAREN KABINE
CABINE MODULAIRE POUR VÉHICULE INDUSTRIEL COMPRENANT UN CADRE AUXILIAIRE, UN CADRE AUXILIAIRE POUR UNE TELLE CABINE MODULAIRE, ET PROCÉDÉ DE FABRICATION D'UNE TELLE CABINE MODULAIRE.

(30) Priority: 22.12.2015 IT UB20159541
(43) Date of publication of application: 31.10.2018
(73) Proprietor: Iveco S.p.A., 10156 Torino (IT)
(72) Inventor: ROCCATO, Maurizio, 10024 Moncalieri (IT); VALLINO, Mattia, 10070 San Francesco Al Campo (IT)
(74) Representative: Bongiovanni, Simone
(86) International application number: PCT/IB2016/057946
(87) International publication number: WO 2017/109752

(56) References cited:
- EP-A1- 0 563 526
- EP-A1- 0 716 005
- WO-A1-03/039897
- DE-A1- 19 943 539
- DE-B- 1 279 490
- DE-U1-202014 009 472
- FR-A- 1 166 006

## Description

### TECHNICAL FIELD

The invention relates to a cabin, in particular a cabin for industrial vehicles for goods transportation.

### BACKGROUND ART

Changes to EC laws, which are currently being approved, allow derogations on the maximum sizes of engine vehicles, in order to obtain a greater (aerodynamic) energy efficiency and to improve safety, though without compromising load capacity.

Therefore, manufacturers are allowed to elongate the cabin front of B-trains and trailer trucks, compared to the dimensions currently used, provided that the vehicle is capable of moving inside a circular crown having predetermined inner and outer diameters.

Furthermore, the presence of manufacturers of industrial vehicles all over the world leads to the need of producing different types of cabin in order to meet the commercial needs and to comply with the rules enforced in the different markets.

For example, in the American or Australian market people use the so-called "conventional" cabins, in which the engine is located in front of the driver compartment and the cabin has the typical long "face", whereas in Europe people use the so-called "cab over" cabins, in which the engine is housed under the driver compartment and the cabin has a substantially flat "face".

Known examples of cabins are shown in documents DE1279490 B, FR 1166006, EP0716005, EP0563526 A1, WO2003039897 A1, DE19943539 A1 or DE202014009472 U1.

Therefore, there is the need to manufacture different types of cabins in a simple and economic fashion.

### DISCLOSURE OF INVENTION

The object of the invention is to solve the technical problem described above.

In order to do so, the invention provides a modular frame according to claim 1.

### BRIEF DESCRIPTION OF THE DRAWINGS

The invention will be best understood upon perusal of the following detailed description of a preferred embodiment, which is provided by way of non-limiting example, with reference to the accompanying drawings, in which:
figure 1 is a side view of an industrial vehicle comprising a conventional "cab-over" cabin;
figure 2 is a side view of a cabin according to the invention;
figures 3A - 3B are perspective views of respective bodies of the cabins of figure 1 and of figure 2;
figure 4 is a perspective view of a detail of the cabin of figure 2;
figures 5, 6 and 7 are sectional views, along lines IV-VI, V-V and VI-VI, of the detail of figure 4;
figure 8 is a perspective view from the bottom of a detail of figure 4;
figures 9 and 10 are schematic side views of possible configurations of the cabin according to the invention.

### BEST MODE FOR CARRYING OUT THE INVENTION

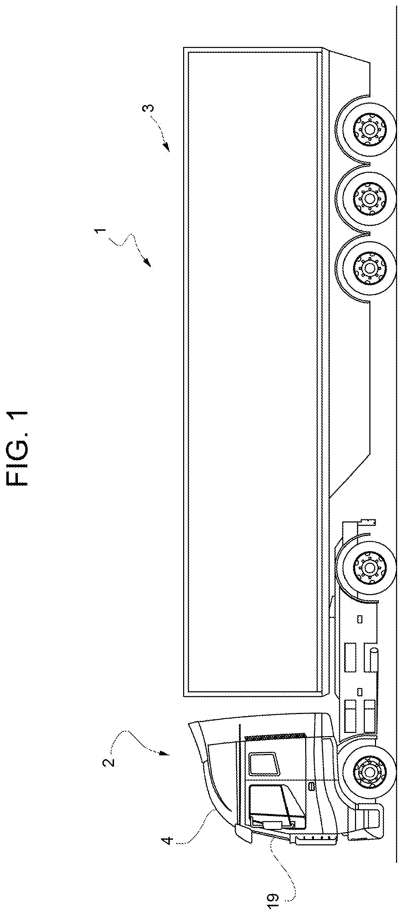

Figure 1 shows an industrial vehicle 1, in particular a trailer truck having a tractor unit 2 and a semi-trailer 3. The tractor unit 2 comprises a conventional "cab-over" cabin 4 and is attached to the semi-trailer in a known manner, which is not shown herein.

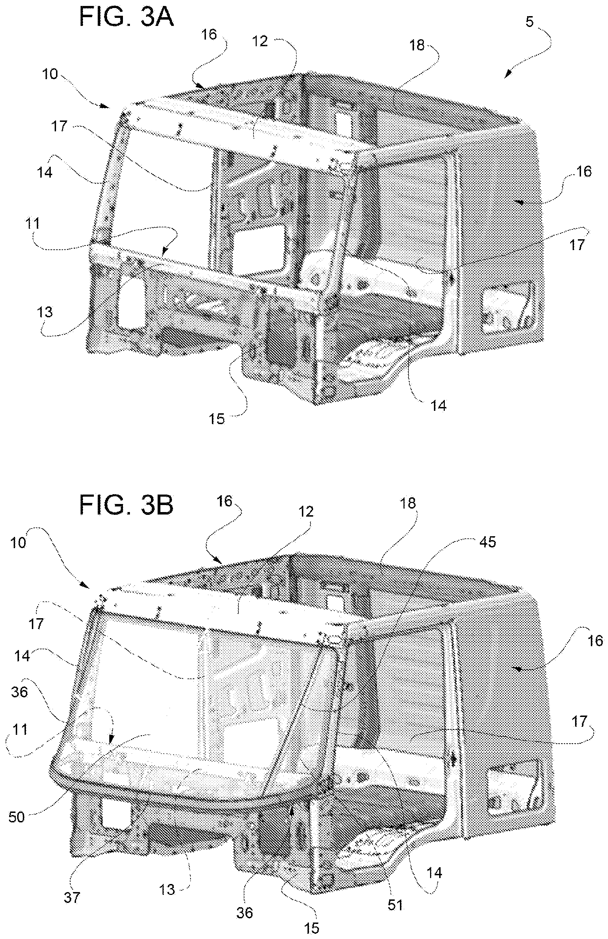

Figure 3A shows a known body 5 of the cabin 4 comprising a front windshield frame 10 delimiting an opening 11 and consisting of an upper crosspiece 12, a lower crosspiece 13 and a pair of lateral uprights (14).

The body 5 comprises, furthermore, a pair of lateral walls 16 defining respective door compartments 17 adjacent to the lateral uprights 14, a rear wall 18 and a front wall 15 extending below the lower crosspiece 13.

In conventional cabins, the windshield 19 is directly applied to the windshield frame 10 and is made up a single flat glass.

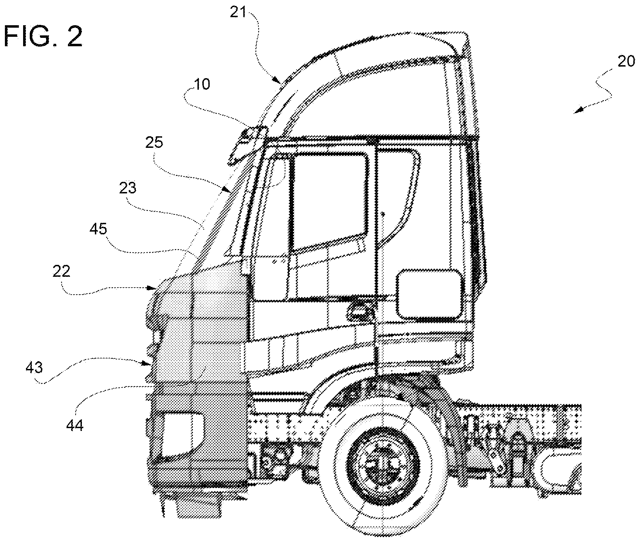

Figure 2 shows a tractor unit 20 comprising a cabin 21 according to the invention.

The cabin 21 is different from the cabin 4 described above in that it comprises a long "face" 22 in the front direction, so as to improve the aerodynamic features of the vehicle.

More in particular, the cabin 21 has a windshield 23 with an embracing shape and with a grater inclination than the conventional windshield 19 of the cabin 4.

The windshield 23 is supported by an auxiliary frame 25, which is pre-assembled and applied to the windshield frame 10 as described more in detail hereinafter.

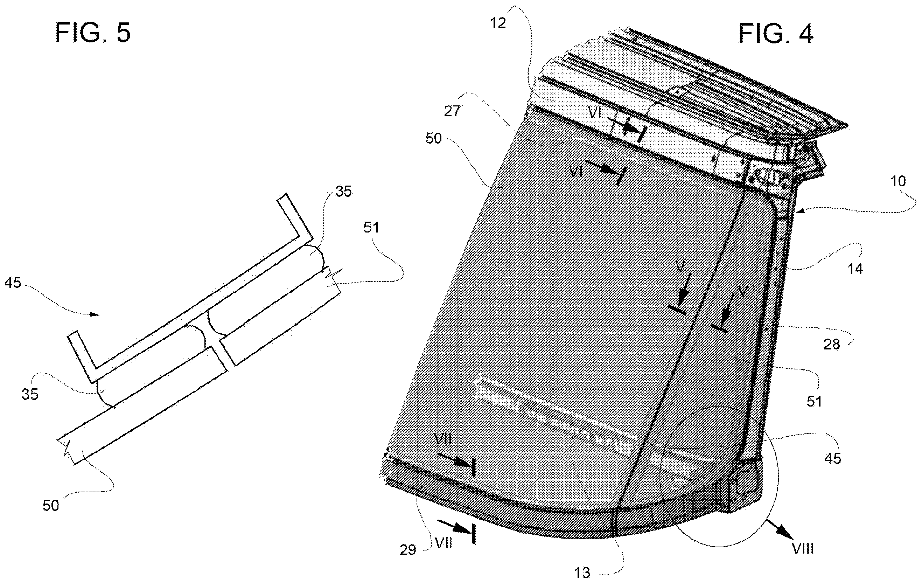

The auxiliary frame 25 (figure 4) basically comprises an upper crosspiece 27, which is suited to be welded to the upper crosspiece 12 of the windshield frame 10, a pair of lateral uprights 28, which are suited to be welded to the respective lateral uprights 14 of the windshield frame 10, and a lower curved crosspiece, which projects forward relative to the lower crosspiece 13 of the windshield frame 10.

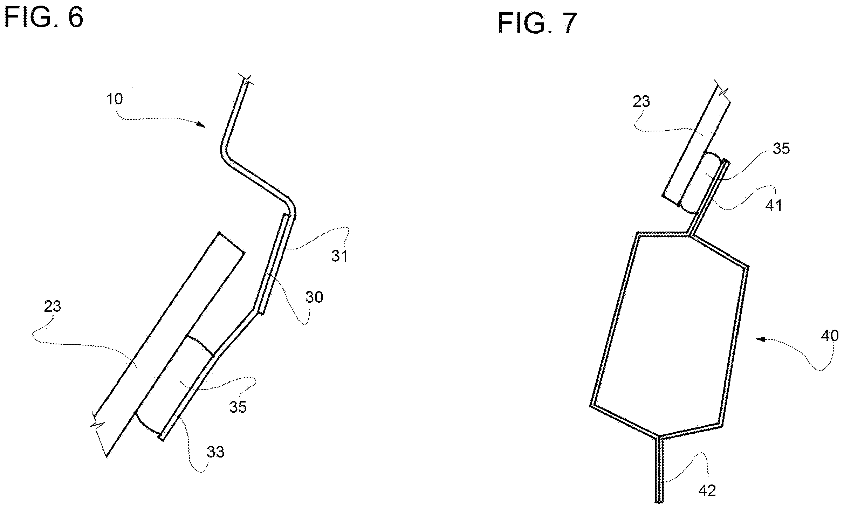

In particular (figure 6), the upper crosspiece 27 and the lateral uprights 28 consist of a section bar, which is made of sheet metal, is shaped by means of longitudinal bends and comprises an outer wing 30, which is configured to match respective inner flanges 31 of the respective portions of the windshield frame 10. The sheet metal section bar comprises, furthermore, an inner wing 33, on which the windshield 23 can be fixed by means of layer of adhesive putty 35.

The lower crosspiece 29 comprises (figure 3B) two end portions 36 fixed to the respective lateral uprights 28 of the auxiliary frame 25 and extending forward with respect to the latter, and an intermediate portion 37 extending transversely in front of the lower crosspiece 13 of the windshield frame 10.

Preferably, the intermediate portion 37 has a curved shape and it is joined to the end portions 36 so as to obtain a "C" shape with the concavity facing the windshield frame 10.

Preferably (figure 7), the lower crosspiece has a box-like section 40, which is sized so as to allow the auxiliary frame 25 to have an adequate stiffness and comprises an inclined upper flange 41, to which the windshield 23 can be fixed by means of the layer of adhesive putty 35, and a lower flange 42, which is suited to support a front radiator grille 43 of the cabin 4 and lateral bodywork elements (figure 2).

The auxiliary frame 25 comprises, furthermore, a pair of front uprights 45 each having a top end fixed to the respective end of the upper crosspiece 27, and a lower end fixed to the respective end of the intermediate portion 37 of the lower crosspiece 29.

Preferably (figure 5), the front uprights 45 have a "C" section that opens up towards the inside of the cabin 4.

The windshield 23 comprises a front glass 50, which is fixed to the upper crosspiece 27, to the intermediate portion 37 of the lower crosspiece 29 and to the front uprights 45 by means of the layer of putty 35, and two lateral glasses 51, which are substantially triangular and are fixed to to the end portions 36 of the lower crosspiece 29 and, on the side, to the lateral uprights 28 and to the front uprights 45 of the auxiliary frame 25.

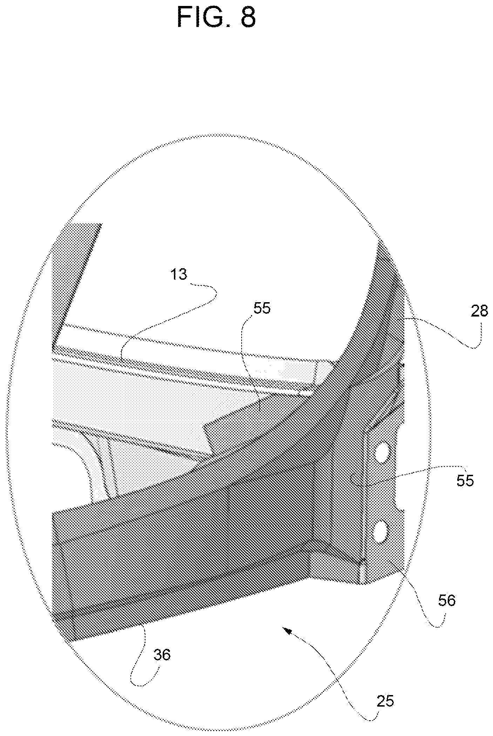

As you can see in figure 8, the auxiliary frame 25 comprises a pair of reinforcement elements 55, preferably made of shaped sheet metal, which are welded to the end portions 36 and to the lateral uprights 28 of the auxiliary frame 25, so as to allow the auxiliary frame to have a greater stiffness.

The reinforcement elements 55 are provided with flanges 56 making up further fixing elements for the auxiliary frame 25 on the windshield frame 10.

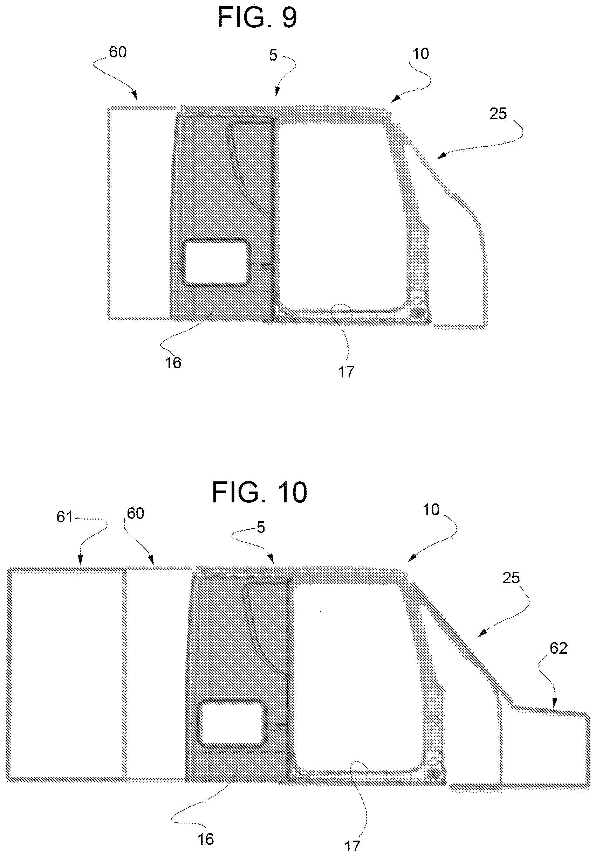

Figures 9 and 10 show two variants of the cabin 21.

The first variant (figure 9) is different from what described above because of the presence of a bodywork module 60 instead of the rear wall 18, so as to increase the inner space of the cabin 21.

The second variant (figure 10) is different from the previous one because of the addition of a further bodywork module 61 fixed to the module 60 on the rear side, so as to further increase the inner volume of the cabin 21 and because of the presence of a front module 62, which is fixed below the auxiliary frame 25 and is designed to house the engine of the vehicle in a so-called "conventional" configuration.

The method for producing the cabin 21 is the following:
- the body 5 is formed in a conventional manner and constitutes a base module for the creation of the cabin 21;
- the auxiliary frame 25 is formed as a pre-assembled unit;
- the auxiliary frame 25 is assembled on the windshield frame 10 of the body 5; and
- the parts of the windshield 23 are mounted in the auxiliary frame 25.

Optionally, the method comprises the further steps of:
- assembling one or more rear modules 60 instead of the rear wall 18 of the body 5;
- assembling a front module 62 below the auxiliary frame 25.

The modular cabin according to the invention leads to evident advantages that can be obtained using it.

The modular technique described above allows you to obtain, in a simple and economic fashion, different versions of the cabin starting from a base body 5 of the type currently used in "cab-over" cabins, both for creating new "elongated" versions and for obtaining "conventional" versions for extra-European markets.

Finally, the modular cabin described above can be subjected to changes and variants, which do not go beyond the scope of protection set forth in the appended claims.

In particular, it is possible to change the number of elements, the shape and the modes of connection of the auxiliary frame 25.

## Claims

1. A cabin (4) for an industrial vehicle comprising a body (5) provided with a front windshield frame (10) defining an opening (11) and comprising an upper crosspiece (12), a lower crosspiece (13) and a pair of lateral uprights (14), **characterized in that** it comprises an auxiliary frame (25) comprising:
- an upper crosspiece (27) fixed to the upper crosspiece (12) of said windshield frame (10);
- a pair of lateral uprights (28) fixed to the respective uprights (14) of said windshield frame (10); and
- a lower crosspiece (29) having two end portions (36) fixed to the respective lateral uprights (28) of said auxiliary frame (25) and extending forward with respect to the latter, and an intermediate portion (37) extending transversely in front of the lower crosspiece (13) of said windshield frame (10),
said auxiliary frame (25) constituting a pre-assembled unit that can be fixed to said windshield frame (10) and being configured to support a windshield (23).

2. A cabin according to claim 1, **characterized in that** said auxiliary frame (25) comprises a pair of inclined front uprights (45) each having a top end fixed to a respective end portion of the upper crosspiece (27), and a lower end connected to a respective end of the intermediate portion (37) of the lower crosspiece (29).

3. A cabin according to claim 1 or 2, **characterized in that** the end portions (36) and the intermediate portion (37) of the lower crosspiece (29) of the auxiliary frame (25) are joined together to define a substantially "C" shape.

4. A cabin according to claim 2 or 3, **characterized in that** the windshield (23) comprises a central portion (50) fixed to the upper crosspiece (27), to the central portion (37) of the lower crosspiece (29) and to the front uprights (45), and two lateral portions (51) each fixed to a respective lateral upright (28), a respective front element (45) and a respective end portion (36) of the lower crosspiece (29) of the auxiliary frame (25).

5. A cabin according to one of the preceding claims, **characterized in that** the body (5) comprises a main unit provided with a pair of lateral walls (16) defining respective door compartments (17) and a front wall (15) extending below the lower crosspiece (13) of the windshield frame (10).

6. A cabin according to claim 5, **characterized in that** it comprises a modular unit (60) fixed at the back of said main unit.

7. An auxiliary frame (25) for a cabin of an industrial vehicle comprising a body (5) provided with a front windshield frame (10) defining an opening (11) and comprising an upper crosspiece (12), a lower crosspiece (13) and a pair of lateral uprights (14), **characterized in that** it comprises:
- an upper crosspiece (27) fixable to the upper crosspiece (12) of said windshield frame (10),
- a pair of lateral uprights (28) fixable to the respective lateral uprights (14) of said windshield frame (10), and
- a lower crosspiece (29) having two end portions (36) fixed to the respective lateral uprights (28) of said auxiliary frame (25) and extending forward with respect to the latter, and a transverse intermediate portion (37);
said auxiliary frame (25) constituting a pre-assembled unit that can be fixed to said windshield frame (10) and being configured to support a windshield (23).

8. A frame according to claim 7, **characterized in that** it comprises a pair of front uprights (45) each having a top end fixed to a respective end portion of the upper crosspiece (27), and a lower end connected to a respective end of the intermediate portion (37) of the lower crosspiece (29).

9. A method for producing a cabin of an industrial vehicle comprising the steps of:
- forming a body (5) provided with a front windshield frame (10) defining an opening (11) and comprising an upper crosspiece (12), a lower crosspiece (13) and a pair of lateral uprights (14);
- forming an auxiliary frame (25) comprising an upper crosspiece (27) configured to be fixed to the upper crosspiece (12) of said windshield frame (10), a pair of lateral uprights (28) configured to be fixed to the respective uprights (14) of said windshield frame (10) and a lower crosspiece (29) having two end portions fixed to the respective lateral uprights (28) of said auxiliary frame (25);
- assembling said auxiliary frame (25) to said body (5) by fixing the upper crosspiece (27) to the upper crosspiece (12) of said windshield frame (10) and the lateral uprights (28) to the respective uprights (14) of said windshield frame.

## Patentansprüche

1. Eine Kabine (4) für ein Industriefahrzeug, umfassend einen Korpus (5) mit einem vorderen Windschutzscheibenrahmen (10), welcher eine Öffnung (11) definiert und welcher einen oberen Querträger (12), einen unteren Querträger (13) und zwei Seitenständer (14) umfasst, **dadurch gekennzeichnet, dass** sie einen Hilfsrahmen (25) umfasst, umfassend:
- einen oberen Querträger (27), welcher an dem oberen Querträger (12) des Windschutzscheibenrahmens (10) befestigt ist;
- zwei Seitenständer (28), welche an den jeweiligen Seitenständern (14) des Windschutzscheibenrahmens (10) befestigt sind; und
- einen unteren Querträger (29), umfassend zwei Endabschnitte (36), welche an den jeweiligen Seitenständern (28) des Hilfsrahmens (25) befestigt sind und sich mit Bezug darauf vorwärts erstrecken, und ein Zwischenteil (37), welches sich quer vor dem unteren Querträger (13) des Windschutzscheibenrahmens (10) erstreckt,
wobei der Hilfsrahmen (25) eine vormontierte Einheit bildet, welche an dem Windschutzscheibenrahmen (10) befestigt werden kann und dazu ausgebildet ist, eine Windschutzscheibe (23) zu tragen.

2. Eine Kabine nach Anspruch 1, **dadurch gekennzeichnet, dass** der Hilfsrahmen (25) zwei geneigte vordere Seitenträger (45) umfasst, welche jeweils ein oberes Ende haben, welches an einen jeweiligen Endabschnitt des oberen Querträgers (27) befestigt ist, und ein unteres Ende, welches an ein jeweiliges Ende des Zwischenteils (37) des unteren Querträgers (29) befestigt ist.

3. Ein Kabine nach Anspruch 1 oder 2, **dadurch gekennzeichnet, dass** die Endabschnitte (36) und das Zwischenteil (37) des unteren Querträgers (29) des Hilfsrahmens (25) miteinander verbunden sind, um im Wesentlichen eine "C"-Form zu definieren.

4. Eine Kabine nach Anspruch 2 oder 3, **dadurch gekennzeichnet, dass** die Windschutzscheibe (23) ein Mittelteil (50) umfasst, welches an dem oberen Querträger (27), an dem Zwischenteil (37) den unteren Querträgers (29) und an den vorderen Seitenständern (45) befestigt ist, und zwei Seitenabschnitte (51), welche jeweils an einem jeweiligen Seitenständer (28), einem entsprechenden vorderen Element (45) und einem entsprechenden Endabschnitt (36) des unteren Querträgers (29) des Hilfsrahmens (25) befestigt sind.

5. Eine Kabine nach einem der vorgehenden Ansprüche, **dadurch gekennzeichnet, dass** der Korpus (5) einen Haupteinheit umfasst, ausgestattet mit einem Paar von Seitenwänden (16), welche jeweils Türfächer (17) definieren, und einer Vorderwand (15), welche sich unterhalb des unteren Querträgers (13) des Windschutzscheibenrahmens (10) erstreckt.

6. Eine Kabine nach Anspruch 5, **dadurch gekennzeichnet, dass** sie eine modulare Einheit (60) umfasst, welche an der Rückseite der Haupteinheit befestigt ist.

7. Ein Hilfsrahmen (25) für eine Kabine eines Industriefahrzeugs, umfassend einen Korpus (5), ausgestattet mit einem vorderen Windschutzscheibenrahmen (10), welcher eine Öffnung (11) definiert und einen oberen Querträger (12), einen unteren Querträger (13) und zwei Seitenträger (14) umfasst, **dadurch gekennzeichnet, dass** er ferner umfasst:
- einen oberen Querträger (27), welcher an dem oberen Querträger (12) des Windschutzscheibenrahmens (10) zu befestigen ist,
- ein Paar von Seitenträgern (28), welche an den jeweiligen Seitenträgern (14) des Windschutzscheibenrahmens (10) befestigt werden können, und
- einen unteren Querträger (29), welcher zwei Endabschnitte (36), welche an die jeweiligen Seitenständer (28) des Hilfsrahmens (25) befestigt sind und sich mit Bezug darauf vorwärts erstrecken, und ein transversales Zwischenteil (37) umfasst;
wobei der Hilfsrahmen (25) eine vormontierte Einheit bildet, welche an dem Windschutzscheibenrahmen (10) zu befestigen ist und dazu ausgebildet ist, eine Windschutzscheibe (23) zu tragen.

8. Ein Rahmen nach Anspruch 7, **dadurch gekennzeichnet, dass** er ein Paar vorderer Seitenträger (45), welche jeweils ein oberes Ende haben, welches an einem jeweiligen Endabschnitt des oberen Querträgers (27) befestigt ist, und ein unteres Ende umfasst, welches an einem jeweiligen Ende des Zwischenteils (37) des unteren Querträgers (29) befestigt ist.

9. Ein Verfahren zur Herstellung einer Kabine eines Industriefahrzeugs, umfassend die Schritte:
- der Herstellung eines Korpus (5), ausgestattet mit einem vorderen Windschutzscheibenrahmen (10), welcher eine Öffnung (11) definiert und einen oberen Querträger (12), einen unteren Querträger (13) und zwei Seitenständer (14) umfasst;
- der Herstellung eines Hilfsrahmens (25), umfassend einen oberen Querträger (27), dazu ausgebildet, an dem oberen Querträger (12) des Windschutzscheibenrahmen (10) befestigt werden zu können, zwei Seitenständer (28), dazu ausgebildet, an den jeweiligen Seitenständern (14) des Windschutzscheibenrahmens (10) befestigt werden zu können, und einen unteren Querträger (29) mit zwei Endabschnitten, welche an den jeweiligen Seitenständern (28) des Hilfsrahmens (25) befestigt sind;
- der Montage des Hilfsrahmens (25) an den Korpus (5), indem der obere Querträger (27) an den oberen Querträger (12) des Windschutzscheibenrahmens (10) und die Seitenständer (28) an den jeweiligen Seitenständern (14) des Windschutzscheibenrahmens befestigt werden.

## Revendications

1. Cabine (4) pour un véhicule industriel comprenant un corps (5) pourvu d'un cadre de pare-brise avant (10) définissant une ouverture (11) et comprenant une traverse supérieure (12), une traverse inférieure (13) et une paire de montants latéraux (14), **caractérisée en ce qu'**elle comprend un cadre auxiliaire (25) comprenant :
- une traverse supérieure (27) fixée à la traverse supérieure (12) dudit cadre de pare-brise (10) ;
- une paire de montants latéraux (28) fixés aux montants (14) respectifs dudit cadre de pare-brise (10) ; et
- une traverse inférieure (29) ayant deux parties d'extrémité (36) fixées aux montants latéraux (28) respectifs dudit cadre auxiliaire (25) et s'étendant vers l'avant par rapport à ces derniers, et une partie intermédiaire (37) s'étendant transversalement devant la traverse inférieure (13) dudit cadre de pare-brise (10),
ledit cadre auxiliaire (25) constituant une unité préassemblée qui peut être fixée audit cadre de pare-brise (10) et étant configuré pour porter un pare-brise (23).

2. Cabine selon la revendication 1, **caractérisée en ce que** ledit cadre auxiliaire (25) comprend une paire de montants avant inclinés (45) ayant chacun une extrémité du dessus fixée à une partie d'extrémité respective de la traverse supérieure (27), et une extrémité inférieure reliée à une extrémité respective de la partie intermédiaire (37) de la traverse inférieure (29).

3. Cabine selon la revendication 1 ou 2, **caractérisée en ce que** les parties d'extrémité (36) et la partie intermédiaire (37) de la traverse inférieure (29) du cadre auxiliaire (25) sont jointes ensemble pour définir une forme sensiblement en « C ».

4. Cabine selon la revendication 2 ou 3, **caractérisée en ce que** le pare-brise (23) comprend une partie centrale (50) fixée à la traverse supérieure (27), à la partie centrale (37) de la traverse inférieure (29) et aux montants avant (45), et deux parties latérales (51) fixées chacune à un montant latéral (28) respectif, un élément avant (45) respectif et une partie d'extrémité (36) respective de la traverse inférieure (29) du cadre auxiliaire (25).

5. Cabine selon l'une des revendications précédentes, **caractérisée en ce que** le corps (5) comprend une unité principale pourvue d'une paire de parois latérales (16) définissant des compartiments de portière (17) respectifs et d'une paroi avant (15) s'étendant en dessous de la traverse inférieure (13) du cadre de pare-brise (10).

6. Cabine selon la revendication 5, **caractérisée en ce qu'**elle comprend une unité modulaire (60) fixée à l'arrière de ladite unité principale.

7. Cadre auxiliaire (25) pour une cabine d'un véhicule industriel comprenant un corps (5) pourvu d'un cadre de pare-brise avant (10) définissant une ouverture (11) et comprenant une traverse supérieure (12), une traverse inférieure (13) et une paire de montants latéraux (14), **caractérisé en ce qu'**il comprend :
- une traverse supérieure (27) fixable à la traverse supérieure (12) dudit cadre de pare-brise (10),
- une paire de montants latéraux (28) fixables aux montants latéraux (14) respectifs dudit cadre de pare-brise (10), et
- une traverse inférieure (29) ayant deux parties d'extrémité (36) fixées aux montants latéraux (28) respectifs dudit cadre auxiliaire (25) et s'étendant vers l'avant par rapport à ces derniers, et une partie intermédiaire transversale (37) ;
ledit cadre auxiliaire (25) constituant une unité préassemblée qui peut être fixée audit cadre de pare-brise (10) et étant configuré pour porter un pare-brise (23).

8. Cadre selon la revendication 7, **caractérisé en ce qu'**il comprend une paire de montants avant (45) ayant chacun une extrémité du dessus fixée à une partie d'extrémité respective de la traverse supérieure (27), et une extrémité inférieure reliée à une extrémité respective de la partie intermédiaire (37) de la traverse inférieure (29).

9. Méthode permettant de produire une cabine d'un véhicule industriel comprenant les étapes consistant à :
- former un corps (5) pourvu d'un cadre de pare-brise avant (10) définissant une ouverture (11) et comprenant une traverse supérieure (12), une traverse inférieure (13) et une paire de montants latéraux (14) ;
- former un cadre auxiliaire (25) comprenant une traverse supérieure (27) configurée pour être fixée à la traverse supérieure (12) dudit cadre de pare-brise (10), une paire de montants latéraux (28) configurés pour être fixés aux montants (14) respectifs dudit cadre de pare-brise (10) et une traverse inférieure (29) ayant deux parties d'extrémité fixées aux montants latéraux (28) respectifs dudit cadre auxiliaire (25) ;
- assembler ledit cadre auxiliaire (25) avec ledit corps (5) en fixant la traverse supérieure (27) à la traverse supérieure (12) dudit cadre de pare-brise (10) et les montants latéraux (28) aux montants (14) respectifs dudit cadre de pare-brise.
